# EUROPEAN PATENT APPLICATION

(11) **EP 1 870 670 A1**
(43) Date of publication of application: **26.12.2007**
(21) Application number: 07012000.1
(22) Date of filing: 19.06.2007
(51) Int. Cl.: G01C 21/16, G06F 3/033

(54) **Method and apparatus for space recognition according to the movement of an input device**

(30) Priority: 21.06.2006 KR 20060055760
(71) Applicant: Microinfinity, Inc., Seoul 153-801 (KR); MICROTECH SYSTEM, INC., Suwon-si Gyeonggi-do 443-813 (KR)
(72) Inventor: Song, Jin-woo, Seocho-gu, Seoul 137-937 (KR); Yim, Sang-soo, Hwaseong-si, Gyeonggi-do 445-982 (KR)
(74) Representative: Strobel, Wolfgang

(57) **Abstract**

A method of recognizing space according to the movement of an input device, the method comprising: measuring angular velocity data using an angular velocity sensor; measuring acceleration data using an accelerometer; estimating a bias of the angular velocity sensor using the acceleration data; calculating Euler angles between a reference navigational frame and a body frame using the angular velocity data and the acceleration data; and identifying position information of the input device according to the movement of the input device by using the calculated Euler angles.

## Description

### Background of the invention

### 1. Field of the Invention

The present invention relates to a method and apparatus for recognizing space according to the movement of an input device, and more particularly, to a method and apparatus for recognizing space according to the movement of an input device by calculating Euler angles using an angular velocity sensor and an accelerometer.

### 2. Description of the Related Art

In general, a navigation system refers to a system providing various information, which is required to identify a location, using a navigation sensor. The information includes position, attitude, velocity, acceleration, time, head angle and angular velocity. A navigation algorithm is one of algorithms adopted by the navigation system and used to measure the attitude of the body of an aircraft.

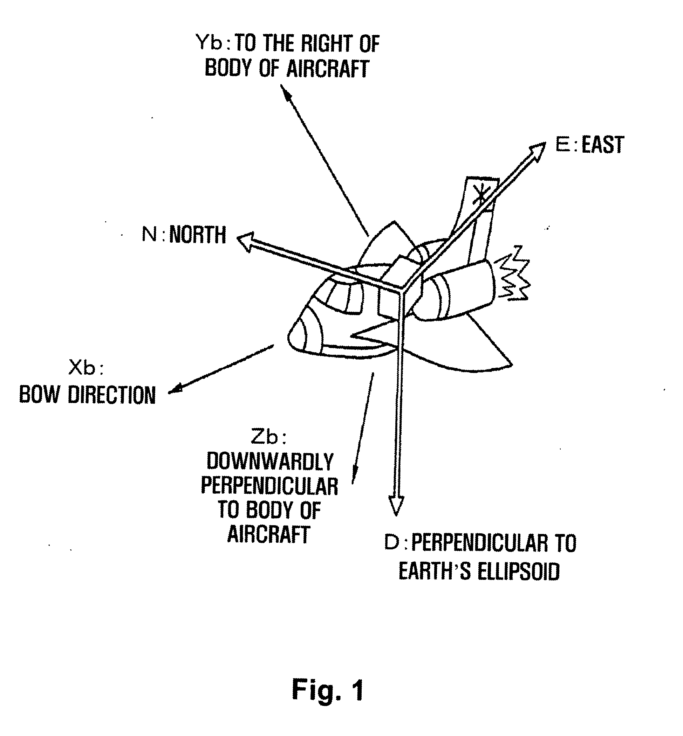

Referring to FIG. 1, a navigational frame is a local-level frame with its origin at the center of mass of the body of an aircraft. In addition, the navigational frame defines an N-axis of the aircraft as north, an E-axis as east, and a D-axis as a direction downwardly perpendicular to the body of the aircraft. The D-axis is perpendicular to the Earth's ellipsoid, the N-axis is in a northerly direction at a local-level plane of the Earth's rotation vector, and the E-axis is perpendicular to a plane formed by two axes (the D-axis and the N-axis) and extends to the right. The navigational frame is a reference frame used to calculate attitude.

As illustrated in FIG. 1, a body frame is a frame with its origin at the center of mass of the body of the aircraft. In addition, the body frame defines an Xb-axis as a bow direction of the body, an Yb-axis as a direction to the right of the body with respect to the Xb-axis, and a Zb-axis as a direction downwardly perpendicular to the body.

If the body frame and the navigational frame are rotated about the same origin, they can match each other. This rotation corresponds to the attitude of the body of the aircraft.

However, the body frame cannot be used as a reference frame for navigation since directions of its axes vary according to the movement of the body of the aircraft. If a sensor is directly attached to the body, an output of the sensor is represented in the body frame. In this case, a process of converting the output of the sensor represented in the body frame into that in another frame is required.

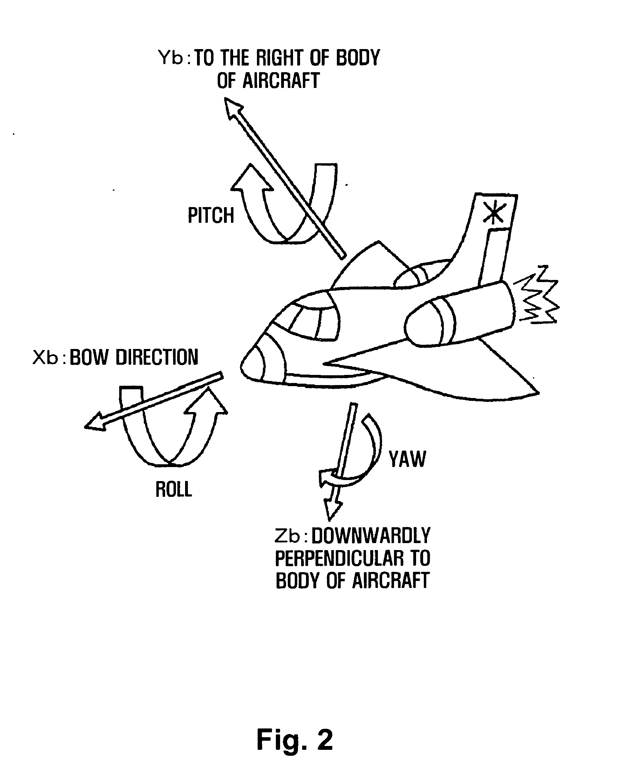

Referring to FIG. 2, Euler angles represent rotation angles (pitch, roll and yaw) with respect to a reference frame, that is, a navigational frame fixed to a ground surface. Since the Euler angles can represent absolute angles, standards for top and bottom/right and left are absolute.

An input device using a conventional accelerometer can calculate roll and pitch angles in a navigational frame using the accelerometer. The input device using the calculated roll and pitch angles include a joystick and an acceleration mouse. That is, the input device using the conventional accelerometer senses its inclination and then converts the roll angle into an x coordinate. In addition, the input device moves a cursor by converting the pitch angle into a y coordinate. The input device measures an angle using a gravity vector component which is generated when the angle is changed.

However, since the input device using the conventional accelerometer measures its inclination change, when it is moved to the right or left by a user, the input device cannot smoothly measure its movement. Furthermore, the input device using the conventional accelerometer cannot extract the accurate movement of the user in a dynamic state in which the user is moving or walking since forward acceleration and impact coexist with the gravity acceleration component in the dynamic state.

In nearly all cases, the input device using the conventional accelerometer has to maintain a level state as an initial state. Therefore, if the input device is initialized when not in the level state, its movement is limited. Consequently, the input device cannot calculate an angle when a sensor sensing gravity stands longitudinally.

On the other hand, an input device using a conventional angular velocity sensor measures angular velocity using the angular velocity sensor and measures an angle by integrating the measured angular velocity. However, the input device using the conventional angular velocity sensor has cumulative errors due to bias changes according to time/temperature. Therefore, it cannot calculate accurate attitude.

In addition, since the input device using the conventional angular velocity calculates a change in attitude in a body frame, the accuracy of attitude is undermined. Furthermore, axes of the input device using the conventional angular velocity sensor are changed according to the attitude in which a user holds the input device such as a pen or a mouse. Therefore, the user always has to hold and manipulate the input device, such as a pen or a mouse, in a certain direction, which results in user inconvenience.

Since the input device using the conventional angular velocity uses an angular velocity value, it cannot measure an angle and only takes a relative value, thereby having low reproducibility. In a conventional method using a threshold value, since a micro-signal is perceived as a bias, precise operations cannot be performed. In this case, if wrongly estimated bias information is used, an angle drift may occur.

In this regard, there is a genuine need for a method of enabling an input device to accurately recognize its movement in space by measuring accurate angles.

### Summary of the invention

The present invention provides a space recognition method and apparatus of an input device, the method and apparatus capable of forming a six degree-of-freedom navigation system using an angular velocity sensor and an accelerometer, calculating Euler angles with respect to a reference frame, and recognizing the movement of the input device in space.

The present invention also provides a space recognition method and apparatus of an input device, the method and apparatus capable of preventing angle divergence using both an angular velocity sensor and an accelerometer and measuring absolute angles, thereby improving angle accuracy.

The present invention also provides a space recognition method and apparatus of an input device, the method and apparatus capable of using Euler angles between a reference navigational frame and a body frame instead of angles in the body frame and thus representing the movement of the input device, such as a presenter or a mouse, regardless of the form or attitude in which a user holds the input device.

The present invention also provides a space recognition method and apparatus of an input device, the method and apparatus capable of mathematically correcting the bias of an angular velocity sensor using an accelerometer.

The present invention also provides a space recognition method and apparatus of an input device, the method and apparatus capable of measuring Euler angles between a reference navigational frame and a body frame, extracting information regarding an absolute attitude and the Euler angles, and thus performing absolute positioning regardless of the form in which the user holds the input device.

However, the objectives of the present invention are not restricted to the one set forth herein. The above and other objectives of the present invention will become more apparent to one of ordinary skill in the art to which the present invention pertains by referencing the detailed description of the present invention given below.

According to an aspect of the present invention, there is provided a method of recognizing space according to the movement of an input device. The method includes measuring angular velocity data using an angular velocity sensor; measuring acceleration data using an accelerometer; estimating a bias of the angular velocity sensor using the acceleration data; calculating Euler angles between a reference navigational frame and a body frame using the angular velocity data and the acceleration data; and identifying position information the input device according to the movement of the input device by using the calculated Euler angles.

According to another aspect of the present invention, there is provided an apparatus for recognizing space according to the movement of an input device. The apparatus includes a transmitter identifying position information of the input device according to the movement of the input device and transmitting the identified position information; and a receiver receiving the position information from the transmitter, wherein the transmitter includes an inertial measurement module measuring angular velocity data and acceleration data as the input device moves; a first main control module calculating Euler angles between a reference navigational frame and a body frame using the angular velocity data and the acceleration data, generating position information of the input device using the calculated Euler angles, and estimating the a bias of the angular velocity sensor using the angular velocity data; and a first transmission/reception module transmitting the position information to the receiver using a wireless communication method and receiving data from the receiver, and the receiver includes a second transmission/reception module receiving the position information from the transmitter and transmitting necessary data to the transmitter; a second main control module processing the received position information; and a communication module communicating with a product linked thereto in order to transmit the processed position information to the linked product.

### Brief description of the drawings

The above and other features and advantages of the present invention will become more apparent by describing in detail preferred embodiments thereof with reference to the attached drawings in which:
- FIG. 1 is a diagram illustrating a navigational frame and a body frame;
- FIG. 2 is a diagram illustrating Euler angles;
- FIG. 3 is a block diagram of a space recognition apparatus of an input device according to an exemplary embodiment of the present invention;
- FIG. 4 is a block diagram of a transmitter illustrated in FIG. 3;
- FIG. 5 is a block diagram of a receiver illustrated in FIG. 3; And
- FIG. 6 is a flowchart illustrating a space recognition method of an input device according to an exemplary embodiment of the present invention.

### Detailed description of the invention

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art.

The term 'input device,' as used herein, encompasses not only devices that are currently widely used, such as a presenter, a space mouse for personal computers (PCs), an extension space remote control for digital televisions (TVs), a space input device for three-dimensional (3D) simulation games, a head mounted display (HMD) input device, a pedometer, a vehicle navigator and a vehicle black box, but also all input devices that will be used in the future.

The present invention will hereinafter be described in detail with reference to the accompanying drawings.

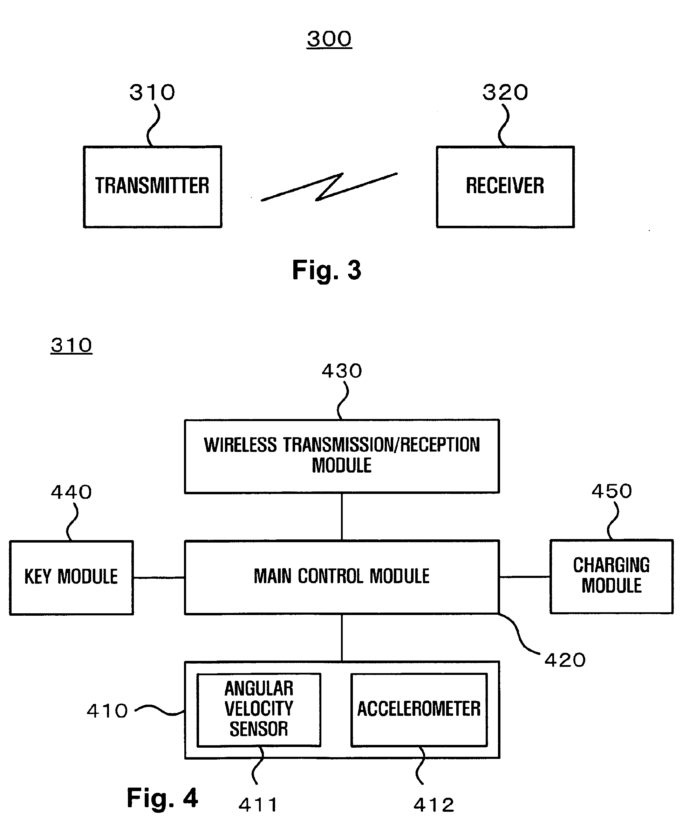

FIG. 3 is a block diagram of a space recognition apparatus 300 of an input device according to an exemplary embodiment of the present invention.

Referring to FIG. 3, the space recognition apparatus 300 includes a transmitter 310 and a receiver 320.

The transmitter 310 transmits position information of the input device, which is recognized as the input device, such as a presenter, a mouse or a remote control, moves, to the receiver 320 using a wireless communication method. That is, the transmitter 310 measures angular velocity data and acceleration data as the input device moves, calculates Euler angles using the measured angular velocity data and acceleration data, identifies position information of the input device recognized as the input device moves, and transmits the identified position information to the receiver 320 using the wireless communication method.

The transmitter 310 may be configured as illustrated in FIG. 4. Hereinafter, the configuration and operation of the transmitter 310 will be described in detail with reference to FIG. 4.

FIG. 4 is a block diagram of the transmitter 310 illustrated in FIG. 3.

Referring to FIG. 4, the transmitter 310 includes an inertial measurement module 410, a main control module 420, a wireless transmission/reception module 430, a key input module 440, and a charging module 450.

The inertial measurement module 410 includes an angular velocity sensor 411 and an accelerometer 412 and measures angular velocity data and acceleration data as the input device moves.

The angular velocity sensor 411 measures the angular velocity data as the the input device moves. The angular velocity data denotes the rate of change of an angle per unit time which is measured by the angular velocity sensor 411, i.e., a gyroscope. If the angular velocity data is integrated once, an angle can be obtained. Therefore, the angular velocity sensor 411 is definitely required to calculate attitude.

The accelerometer 412 measures the acceleration data as the input device moves. The acceleration data denotes acceleration measured by the accelerometer 412. If the acceleration data is integrated, velocity and distance can be calculated.

As described above, the space recognition apparatus 300 of the input device according to the present embodiment measures the angular velocity data and the acceleration data using the inertial measurement module 410 which integrates the angular velocity sensor 411 and the accelerometer 412.

The main control module 420 calculates the Euler angles using the angular velocity data and the acceleration data measured by the inertial measurement module 410.

As described above, since the transmitter 310 calculates the Euler angles using not only the angular velocity sensor 411 but also the accelerometer 412, the Euler angles can be calculated more accurately.

In addition, since the space recognition apparatus 300 measures angles using the angular velocity sensor 411 and the accelerometer 412 integrated with each other, it can calculate the Euler angles between a reference navigational frame and a body frame instead of calculating angles in the body frame.

Therefore, the space recognition apparatus 300 uses the Euler angles between the reference navigational frame and the body frame instead of the angles in the body frame. Accordingly, the space recognition apparatus 300 can represent the movement of the input device, such as a presenter or a mouse, regardless of the form or attitude in which a user holds the input device. Since the Euler angles refer to angles with respect to a reference frame which is fixed to a ground surface, they can represent absolute angles, and standards for top and bottom/right and left are absolute.

The main control module 420 estimates a bias of the angular velocity sensor 411 using information provided by the accelerometer 412. Therefore, the main control module 420 can mathematically estimate the bias of the angular velocity sensor 411 unlike in a conventional bias estimation method which incurs a dead zone.

The main control module 420 uses a Kalman filtering technique to integrate the angular velocity sensor 411 and the accelerometer 412 and estimate the bias of the angular velocity sensor 411. The Kalman filtering technique is most widely applied in searching for and tracking a moving target. The Kalman filtering technique is a technique for estimating state variables of a linear system and was introduced by Kalman in 1960.

As described above, the space recognition apparatus 300 does not estimate the bias of the angular velocity sensor 411 using conventional activation buttons. Therefore, the space recognition apparatus 300 can perform systematic bias estimation.

The main control module 420 identifies position information of the input device according to the movement of the input device using the calculated Euler angles.

As described above, since the space recognition apparatus 300 can extract information regarding an absolute attitude and the Euler angles, it can perform absolute positioning regardless of the form in which a user holds the input device.

The wireless transmission/reception module 430 transmits the position information to the receiver 320 using the wireless communication method and receives data from the receiver 320 using the wireless communication method.

The key module 440 includes keys required to operate the transmitter 310. When a user presses a key, the key module 440 generates key data corresponding to the pressed key and provides the generated key data to the main control module 420.

The main control module 420 analyzes the key data provided by the key module 440 and controls the transmitter 310 to perform an operation corresponding to the analyzed key data.

The main control module 420 can mathematically calculate and thus prevent drift of the Euler angles. Therefore, even if the main control module 420 is used for a long period of time or minute inputs are continuously added to the main control module 420, it can still perform bias estimation.

The charging module 450 charges a battery that supplies power required to operate the transmitter 310.

As described above, the transmitter 310 of the input device according to the present embodiment calculates the Euler angles with respect to the reference frame using the angular velocity sensor 411 and the accelerometer 412, identifies position information of the input device recognized as the input device moves by using the calculated Euler angles, and transmits the identified position information to the receiver 320 using the wireless communication method.

The receiver 320 receives the position information from the transmitter 310 using the wireless communication method.

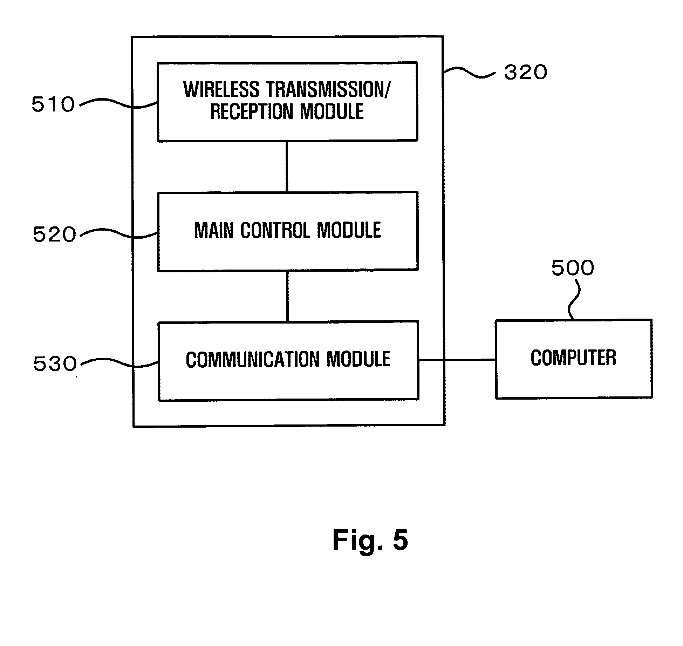

FIG. 5 is a block diagram of the receiver 320 illustrated in FIG. 3.

Referring to FIG. 5, the receiver 320 includes a wireless transmission/reception module 510, a main control module 520, and a communication module 530.

The wireless transmission/reception module 510 receives the above position information from the transmitter 310 using the wireless communication method and transmits data to the transmitter 310 using the wireless communication method.

The main control module 520 controls the overall operation of the receiver 320 and processes the received position information.

The communication module 530 is linked to a product such as a computer 500, a projector or a TV and includes a universal serial bus (USB) or a serial peripheral interface (SPI) as an interface module for communicating with the linked product. That is, the communication module 530 transmits the position information to the product such as the computer 500, a projector or a TV. Accordingly, the product can identify the movement of the input device, such as a presenter, a mouse or a remote control, in space based on the position information received from the communication module 530 and display the identified movement on a screen thereof.

As described above, the space recognition apparatus 300 of the input device according to the present embodiment can form a six degree-of-freedom navigation system using the angular velocity sensor 411 and the accelerometer 412, calculate the Euler angles with respect to the reference frame, and recognize the movement of the input device, such as a presenter, a mouse or a remote control, in space.

Therefore, the transmitter 310 of the space recognition apparatus 300 transmits position information of the input device identified according to the movement of the input device to the receiver 320 using the wireless communication method, and the receiver 320 transmits the received position information to a product such as the computer 500, a projector or a TV. Accordingly, the space recognition apparatus 300 can be used as an information input device for the product.

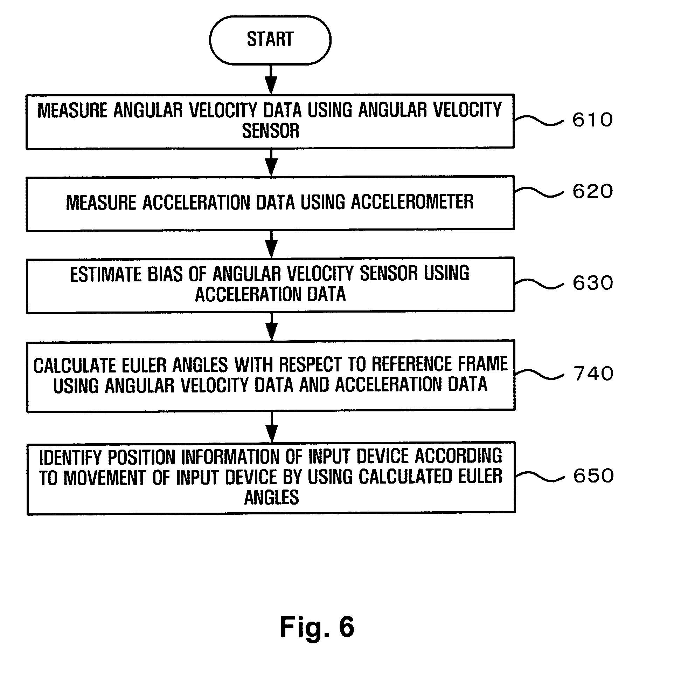

FIG. 6 is a flowchart illustrating a space recognition method of an input device according to an exemplary embodiment of the present invention.

Referring to FIG. 6, the input device measures angular velocity data using an angular velocity sensor in operation 610 and measures acceleration data using an accelerometer in operation 620.

In this case, operation 610 in which the angular velocity data is measured using the angular velocity sensor and operation 620 in which the acceleration data is measured using the accelerometer may be performed sequentially or simultaneously.

In operation 630, the input device estimates the bias of the angular velocity sensor using the angular velocity data measured by the accelerometer.

Alternatively, in operation 630, the input device may estimate the bias of the angular velocity sensor using the Kalman filtering technique. The Kalman filtering technique is also used to integrate the angular velocity sensor and the accelerometer.

As described above, since the space recognition method of the input device according to the present embodiment estimates the bias of the angular velocity sensor using information provided by the accelerometer, it can mathematically estimate the bias of the angular velocity sensor unlike in the conventional bias estimation method which gives a dead zone.

Furthermore, the drift of the Euler angles can be mathematically calculated and thus prevented. Accordingly, even if the input device is used for a long period of time or minute inputs are continuously added to the input device, bias estimation can still be performed.

In addition, since the bias of the angular velocity sensor can be mathematically corrected using the space recognition method, the bias phenomenon of the angular velocity sensor can be eliminated.

In operation 640, the input device calculates the Euler angles using the measured angular velocity data and acceleration data. That is, in operation 640, the input device calculates the Euler angles between a reference navigational frame and a body frame using the measured angular velocity data and acceleration data.

As described above, since the space recognition method calculates the Euler angles using the angular velocity data and the acceleration data, the Euler angles can be calculated more accurately.

In operation 650, the input device identifies its position information according to its movement by using the calculated Euler angles. The input device transmits the identified position information to a receiver, which is linked to a product such as a computer, a projector or a TV, using a transmitter and a wireless communication method. Then, the receiver transmits the received position information to the linked product. Since the product receives the position information from the input device having a space recognition function, it can use the input device as an information input device.

As described above, the space recognition method uses the Euler angles between the reference navigational frame and the body frame instead of angles in the body frame. Accordingly, the movement of the input device, such as a presenter or a mouse, can be represented regardless of the form or attitude in which a user holds the input device.

In addition, since the space recognition method measures angles using the angular velocity sensor and the accelerometer integrated with each other, it can measure the Euler angles between the reference navigational frame and the body frame instead of the angles in the body frame. Accordingly, information regarding an absolute attitude and the Euler angles can be extracted. Consequently, the input device can perform absolute positioning regardless of the form in which a user holds the input device.

The space recognition method according to the present invention includes a computer-readable medium. The computer-readable medium stores program commands that are operable in various computers. The computer-readable medium can store program commands, data files, and data structures, or combining those. The program command of the medium is specially designed and configured, or is notified to those skilled in the art for use. The computer-readable recording medium includes a magnetic media (such as a hard disk, a floppy disk, and magnetic tape), an optical media (such as CD-ROM and DVD), a magneto-optical media (such as floptical disk), and also ROM, RAM, and flash memory. Moreover, the computer-readable recording medium includes a hardware device for storing and performing the program commands. The medium can be a transmission medium such as a light or metal line, and a waveguide pipe including carrier that transmits a signal indicating program commands and data structures. The program commands can be a machine language code by a compiler and a high-level programming language code by an interpreter, which can be executable in the computer.

As described above, the present invention can form a six degree-of-freedom navigation system using an angular velocity sensor and an accelerometer, calculate Euler angles with respect to a reference frame, and recognize the movement of an input device, such as a presenter, a mouse or a remote control, in space.

In addition, the present invention can prevent angle divergence using both the angular velocity sensor and the accelerometer and measure absolute angles, thereby improving angle accuracy.

Since the present invention uses the Euler angles between a reference navigational frame and a body frame instead of angles in the body frame, it can represent the movement of the input device, such as a presenter or a mouse, regardless of the form or attitude in which a user holds the input device.

Also, the present invention can mathematically correct the bias of the angular velocity sensor using the accelerometer.

Last, since the present invention can measure the Euler angles between the reference navigational frame and the body frame instead of the angles in the body frame, it can extract information regarding an absolute attitude and the Euler angles. Consequently, the input device can perform absolute positioning regardless of the form in which the user holds the input device.

While the present invention has been particularly shown and described with reference to exemplary embodiments thereof, it will be understood by those of ordinary skill in the art that various changes in form and detail may be made therein without departing from the spirit and scope of the present invention as defined by the following claims.

## Claims

1. A method of recognizing space according to the movement of an input device, the method comprising:
- measuring angular velocity data using an angular velocity sensor;
- measuring acceleration data using an accelerometer;
- estimating a bias of the angular velocity sensor using the acceleration data;
- calculating Euler angles between a reference navigational frame and a body frame using the angular velocity data and the acceleration data; and
- identifying position information of the input device according to the movement of the input device by using the calculated Euler angles.

2. The method of claim 1, wherein the estimating of the bias of the angular velocity sensor is performed using a Kalman filtering technique.

3. A computer-readable recording medium on which a program for executing the method of claim 1 or 2 in a computer is recorded.

4. An apparatus for recognizing space according to the movement of an input device, the apparatus comprising:
- a transmitter identifying position information of the input device according to the movement of the input device and transmitting the identified position information; and
- a receiver receiving the position information from the transmitter, wherein the transmitter comprises:
- an inertial measurement module measuring angular velocity data and acceleration data as the input device moves;
- a first main control module calculating Euler angles between a reference navigational frame and a body frame using the angular velocity data and the acceleration data, generating position information of the input device using the calculated Euler angles, and estimating the a bias of the angular velocity sensor using the angular velocity data; and
- a first transmission/reception module transmitting the position information to the receiver using a wireless communication method and receiving data from the receiver, and
the receiver comprises:
- a second transmission/reception module receiving the position information from the transmitter and transmitting necessary data to the transmitter;
- a second main control module processing the received position information; and
- a communication module communicating with a product linked thereto in order to transmit the processed position information to the linked product.

5. The apparatus of claim 4, wherein the inertial measurement module comprises:
- an angular velocity sensor measuring the angular velocity data; and
- an accelerometer measuring the acceleration data.

6. The apparatus of claim 4, wherein the first main control module estimates the bias of the angular velocity sensor using a Kalman filtering technique.

7. The apparatus of claim 4, wherein the input device comprises a presenter, a mouse or a remote control.
